# EUROPÄISCHE PATENTANMELDUNG

(11) **EP 4 477 077 A1**
(43) Veröffentlichungstag der Anmeldung: **18.12.2024**
(21) Anmeldenummer: 24181159.5
(22) Anmeldetag: 10.06.2024
(51) Int. Cl.: A01K 5/00

(54) **SELBSTFAHRENDER FUTTERMISCHWAGEN MIT ENTNAHMEVORRICHTUNG UND VERFAHREN ZUR STEUERUNG EINES FUTTERMISCHWAGENS**

(30) Priorität: 13.06.2023 DE 102023115391
(71) Anmelder: B. Strautmann & Söhne GmbH u. Co. KG, 49196 Bad Laer (DE)
(72) Erfinder: Wegmann, geb. Malewski, Benjamin, 49497 Mettingen (DE)
(74) Vertreter: Dr. Träger & Strautmann PAe PartG mbB

(57) **Zusammenfassung**

Ein Futtermischwagen (100) umfasst eine Antriebseinrichtung (13), einen Futtervorratsbehälter (10), einen schwenkbaren Entnahmearm (11) mit einer Entnahmevorrichtung (12) zur Entnahme von Futter (14) aus einem Futterlager (15) während eines Befüllungsbetriebszustands des Futtermischwagens (100), eine Förderanlage (16) mit einer steuerbaren Fördergeschwindigkeit (v, vSOLL) zum Transport des von der Entnahmevorrichtung (12) entnommenen Futters (14) in den Futtervorratsbehälter (10), einen Datenspeicher (18) und eine Steuereinrichtung (20) zum Steuern der Fördergeschwindigkeit (v, vSOLL) der Förderanlage (16) auf Grundlage von in dem Datenspeicher (18) gespeicherten Daten.

Um den Futtermischwagen (100) gleichmäßig zu befüllen, wird vorgeschlagen, den Futtermischwagen (100) mit mindestens einer Schwenkposition-Ermittlungseinrichtung (30) zu versehen, die ausgebildet ist, während des Befüllungsbetriebszustands eine aktuellen Schwenkposition (SPist, SP1, SP2, W) der schwenkbaren Förderanlage (16) zu ermitteln. Alternativ oder zusätzlich kann mindestens eine Füllstandlängsverteilung-Ermittlungseinrichtung (50) vorgesehen sein, die ausgebildet ist, während des Befüllungsbetriebszustands eine aktuelle Füllstandlängsverteilung (FSLV) des in dem Futtervorratsbehälter (10) befindlichen Futters in einer Längsrichtung (L) des Futtermischwagens (100) zu ermitteln. Die Steuereinrichtung (20) ist ausgebildet, während des Befüllungsbetriebszustands die Fördergeschwindigkeit (v, vSOLL) der Förderanlage (16) in Abhängigkeit der ermittelten Schwenkposition (SPist, SP1, SP2, W) und/oder der ermittelten Füllstandlängsverteilung (FSLV) unter Einhaltung einer der Steuervorrichtung (20) als Steuerungskriterium vorgegebenen Längsbefüllungscharakteristik derart zu steuern, dass während des Befüllungsbetriebszustands ein Futterüberwurf und eine Überfüllung eines Längsteilabschnitts (L1, L2, L3) des Futtervorratsbehälters (10) verhindert werden. Es wird auch ein Verfahren zur Steuerung der Befüllung des Futtermischwagens (100) vorgestellt.

## Beschreibung

Die Erfindung betrifft einen selbstfahrenden Futtermischwagen mit einer Entnahmevorrichtung nach dem Oberbegriff des Anspruchs 1 sowie ein Verfahren zur Steuerung eines solchen Futtermischwagens.

Automatische Verfahren zur Fütterung von größeren Viehbeständen sind für unterschiedliche Viehgattungen, wie beispielsweise Schweine und Geflügel seit Jahrzehnten bekannt. Auch im Bereich der Rindviehhaltung sind Fütterungsmaschinen, im Folgenden Futtermischwagen genannt, bekannt, mit denen alle Arbeitsgänge von der Futterentnahme aus Vorratslagern über die Erstellung einer vordefinierten Futtermischung bis zur Ablage des Futters in einem Futtergang durchführbar sind.

Aus EP 2 997 815 A1 ist ein Futtermischwagen mit einer Einrichtung zur gleichmäßigen Verteilung des Futters im Mischbehälter bekannt. Das in den Mischbehälter des Futtermischwagens zu fördernde Futter wird zunächst mittels einer Fräswalze aus einem Vorratslager gelöst. Die Fräswalze ist an einen schwenkbaren Entnahmearm gekoppelt, in dessen Innerem sich ein erster Förderer in Form eines Förderband befindet. Die Fräswalze übergibt das aus dem Vorratslager herausgelöste Futter an den ersten Förderer.

Der Futtermischwagen umfasst einen zweiten Förderer, der operativ zwischen dem ersten Förderer und dem Mischbehälter angeordnet ist. Der erste Förderer übergibt somit das Futter an den zweiten Förderer welcher fest am Futtermischwagen bzw. dessen Mischbehälter montiert ist. Der zweite Förderer übernimmt das vom Förderband zugeführte Futter und fördert es in den Mischbehälter. Die Vorschubgeschwindigkeit des zweiten Förderers ist im Verhältnis zur Vorschubgeschwindigkeit des ersten Förderers einstellbar. Durch eine Veränderung der Vorschubgeschwindigkeit des zweiten Förderers kann die Wurfweite des vom zweiten Förderer geförderten Futters gesteuert werden. Dadurch ist es möglich, auch weniger gefüllte Bereiche des Mischbehälters zu füllen und den Mischbehälter insgesamt gleichmäßig zu befüllen.

Nachteilig an dem aus EP 2 997 815 A1 bekannten System ist, dass die Integration eines zweiten Förderers in die Befülleinrichtung insgesamt aufwendig ist. Zudem ist der Fördergutstrom des ersten Förderers von dessen momentanen Schwenkwinkel abhängig. Hierdurch kann es an der Übergangstelle von erstem Förderer zu zweitem Förderer zu Problemen kommen. Beispielsweise ist bei hoch aufgerichtetem Entnahmearm der Abwurfwinkel des ersten Förderers stark nach unten gerichtet. Hierdurch wird eine Übergabe des Futters an den zweiten Förderer erschwert. Wird vom zweiten Förderer weniger Futter weitergefördert als vom ersten Förderer zugeführt wurde, kann es insbesondere im Übergabebereich von erstem zu zweitem Förderer zu einer Verstopfung kommen.

Aus EP 1 449 426 A2 ist ein Futtermischwagen bekannt, der mit einem schwenkbaren Entnahmearm mit einer Entnahmevorrichtung zur Entnahme von Futter aus einem Futterlager während eines Befüllungsbetriebszustands versehen ist. Der Futtermischwagen ist mit einer Förderanlage zum Transport des von der Entnahmevorrichtung entnommenen Futters in einen Futtervorratsbehälter des Futtermischwagens ausgerüstet. Die Fördergeschwindigkeit der Förderanlage ist durch eine Steuereinrichtung des Futtermischwagens steuerbar. Die Menge des im Futtervorratsbehälter befindlichen Futters wird kontinuierlich mittels einer Wiegeeinrichtung erfasst. Um eine gleichmäßige Verteilung einer vom Futterlager zu entnehmenden Futterrationsmenge entlang der Längsrichtung des Futtervorratsbehälters zu ermöglichen, sieht EP 1 449 426 A2 eine automatische Umschaltung der Fördergeschwindigkeit bei Erreichen eines Teilgewichts einer bereits gewogenen und in den Futtervorratsbehälter beförderten Futterrationsteilmenge unter Kenntnis einer über ihr Gesamtgewicht vorgegebenen Futterrationsgesamtmenge vor. Es wird beispielsweise zunächst mit hoher Fördergeschwindigkeit ein hinterer Abschnitt des Futtervorratsbehälters mit Futter befüllt, und bei Erreichen eines aufgenommenen Futtergewichts von 50% der Futterrationsgesamtmenge wird anschließend mit reduzierter Fördergeschwindigkeit ein vorderer Abschnitt des Futtervorratsbehälters mit Futter befüllt.

Bei derartigen bekannten Futtermischwagen kann nach Feststellung der Erfinder eine gleichmäßige Befüllung des Futtervorratsbehälters nicht zufriedenstellend gewährleistet werden. Selbst bei der oben beschriebenen verwiegungsbasiert gesteuerten schrittweisen Befüllung von Teilabschnitten des Futtervorratsbehälter kann eine übermäßig hohe Anhäufung von Futtermengen in einzelnen Längsteilabschnitten, insbesondere in den vorderen und/oder hinteren, des Futtervorratsbehälter auftreten. Beim Befüllen eines hinteren Längsteilabschnitts des Futtervorratsbehälters kann zudem ein Überwerfen von Futter über das hintere Ende des Futtervorratsbehälters hinaus und somit hinter den Futtermischwagen nicht immer vermieden werden. Eine unerwünscht hohe Ansammlung von Futter in einem vorderen Längsteilabschnitt des Futtervorratsbehälters kann zu einer Verstopfung der Förderanlage führen. Bei aktivierten Mischeinrichtungen, die üblicherweise am Boden des Futtervorratsbehälters vorgesehen sind, können insbesondere bei von oben befüllbaren Mischschnecken Futtermengen nach oben und im Fall einer unerwünscht hohen lokalen Futteransammlung zum Teil aus dem Futtervorratsbehälter heraus verschoben werden.

Die beschriebenen Nachteile einer entlang der Längsrichtung des Futtermischwagens ungleichmäßig hohen Einbringung vom Futter resultieren in einer längeren Zeitdauer zum homogenen Vermischen von Futterkomponenten sowie einer möglichen Verschwendung bzw. Verschmutzung durch aus dem Futtervorratsbehälter herausgeworfenes oder neben den Futtermischwagen befördertes Futter.

Aufgabe der Erfindung ist es, die beschriebenen Nachteile zu beseitigen und während des Befüllungsbetriebszustands des Futtermischwagens eine entlang der Längsrichtung des Futtermischwagens gleichmäßig hohe Einbringung von Futter in den Futtervorratsbehälter zu gewährleisten.

Diese Aufgabe wird gelöst durch einen Futtermischwagen mit den Merkmalen des Anspruchs 1.

Der Futtermischwagen umfasst eine Antriebseinrichtung, einen Futtervorratsbehälter, eine Wiegeeinrichtung zur Ermittlung einer in den Futtervorratsbehälter eingebrachten Futtermenge, einen schwenkbaren Entnahmearm mit einer Entnahmevorrichtung zur Entnahme von Futter aus einem Futterlager während eines Befüllungsbetriebszustands des Futtermischwagens, eine Förderanlage mit einer steuerbaren Fördergeschwindigkeit zum Transport des von der Entnahmevorrichtung entnommenen Futters in den Futtervorratsbehälter, einen Datenspeicher und eine Steuereinrichtung zum Steuern der Fördergeschwindigkeit der Förderanlage auf Grundlage von in dem Datenspeicher gespeicherten Daten.

Auf der Suche nach einer Lösung der Aufgabenstellung haben die Erfinder erkannt, dass für Futtermischwagen, bei denen zur Futterentnahme während des Befüllungsbetriebszustands der Entnahmearm zusammen mit der Förderanlage verschwenkbar ist, der Abwurfabschnitt für das von der Förderanlage in den Futtervorratsbehälter ausgeworfene Futter bei konstanter Fördergeschwindigkeit von der aktuellen Schwenkposition der Förderanlage abhängt. Wenn der Entnahmearm und die Förderanlage sich in einer hohen Schwenkposition mit einem großen Abstand zum Boden des Futterlagers befinden, wird das entnommene Futter bei konstanter Fördergeschwindigkeit zu einem anderen Abwurfabschnitt in Längsrichtung des Futtervorratsbehälters transportiert, als wenn sich unter Beibehaltung der Fördergeschwindigkeit der Entnahmearm und die Förderanlage in einer niedrigen Schwenkposition mit einem geringen Abstand zum Boden des Futterlagers befinden.

Zur Lösung der Aufgabe wird daher erfindungsgemäß vorgeschlagen, dass der Futtermischwagen mit mindestens einer Schwenkposition-Ermittlungseinrichtung versehen ist, die ausgebildet ist, während des Befüllungsbetriebszustands eine aktuelle Schwenkposition der Förderanlage zu ermitteln. Weiterhin umfasst der Futtermischwagen eine Füllstandlängsverteilung-Ermittlungseinrichtung, die ausgebildet ist, während des Befüllungsbetriebszustands eine aktuelle Füllstandlängsverteilung des in dem Futtervorratsbehälter befindlichen Futters in einer Längsrichtung des Futtermischwagens zu ermitteln.

Die Steuervorrichtung des erfindungsgemäßen Futtermischwagens mit der mindestens einen Schwenkposition-Ermittlungseinrichtung ist ausgebildet, während des Befüllungsbetriebszustands die Fördergeschwindigkeit der Förderanlage in Abhängigkeit der ermittelten Schwenkposition und/oder der ermittelten Füllstandsverteilung unter Einhaltung einer der Steuervorrichtung vorgegebenen Längsbefüllungscharakteristik derart zu steuern, dass während des Befüllungsbetriebszustands ein Futterüberwurf, also ein zu weiter Auswurf aus der Förderanlage hinten den Futtervorratsbehälter und somit neben diesen, und eine Überfüllung eines Längsteilabschnitts des Futtervorratsbehälters verhindert werden.

Besonders vorteilhaft ist, dass bereits ein einziger Förderer ausreicht um die Befüllung des Mischbehälters zu steuern und den Mischbehälter insgesamt gleichmäßig zu befüllen. Bei Realisation der Erfindung mittels eines einzigen Förderers entfällt die Problemzone, die sich bei dem aus dem Stand der Technik gemäß EP 2 997 815 A1 bekannten Systems zwischen erstem und zweiten Förderer ergibt.

Die alternativ oder optional zur Schwenkpositions-Ermittlungseinrichtung vorgesehene Füllstandlängsverteilungs-Ermittlungseinrichtung ist insbesondere für solche Futtermischwagen vorteilhaft, bei denen Entnahmevorrichtung und Förderanlage nicht in einem Förderarm gemeinsam integriert sind, sondern ein Förderarm ohne Förderanlage und die Förderanlage nur geringfügig oder gar nicht schwenkbar als fixierte Einheit am Futtermischwagen ausgebildet ist. Somit kann die Füllstandlängsverteilung nicht nur über ein vordefiniertes Beladungsprofil gesteuert werden, sondern auch, indem nach Art eines Regelkreises eine aktuelle Füllstandlängsverteilung ermittelt, mit vorgegebenen Sollwerten verglichen und die weitere Befüllung in Abhängigkeit von etwaig ermittelten Abweichungen nachreguliert wird.

Dies geschieht, indem die Steuervorrichtung des erfindungsgemäßen Futtermischwagens mit der mindestens einen Füllstandlängsverteilung-Ermittlungseinrichtung so ausgebildet ist, dass sie während des Befüllungsbetriebszustands die Fördergeschwindigkeit der Förderanlage in Abhängigkeit der ermittelten Füllstandlängsverteilung, alternativ oder optional zu der oben erwähnten Steuerung der Fördergeschwindigkeit in Abhängigkeit der ermittelten Schwenkposition, unter Einhaltung einer der Steuervorrichtung vorgegebenen Längsbefüllungscharakteristik derart steuert, dass während des Befüllungsbetriebszustands ein Futterüberwurf und eine Überfüllung eines Längsteilabschnitts des Futtervorratsbehälters verhindert werden.

Der Begriff der Längsrichtung des Futtermischwagens bezeichnet die Richtung einer Längsachse des Futtermischwagens, die bei einer Geradeaus-Fahrt des Futtermischwagens mit der Fahrtrichtung des Futtermischwagens übereinstimmt. An der Vorderseite des Futtermischwagens befindet sich die Entnahmevorrichtung.

Der Futtervorratsbehälter definiert ein Volumen zur Aufnahme von von der Förderanlage in den Futtervorratsbehälter ausgeworfenem Futter. Das Volumen erstreckt sich in der Längsrichtung des Futtermischwagens, in einer zur Längsrichtung orthogonalen Querrichtung, und in einer zur Längsrichtung und Querrichtung orthogonalen dritten Richtung, deren Ausmaß die maximale Befüllungshöhe bzw. Tiefe des Futtervorratsbehälters definiert.

Der Begriff des Längsteilabschnitts des Futtervorratsbehälters bezieht sich auf eine gedankliche Aufteilung des Futtervorratsbehälters in mehrere entlang der Längsrichtung des Futtermischwagens angeordnete benachbarte und nahtlos aneinander angrenzende Abschnitte bzw. Bereiche, die jeweils als Längsteilabschnitt bezeichnet werden. Der vorderste Längsteilabschnitt hat den geringsten Abstand zu der Förderanlage und der Entnahmevorrichtung. Der hinterste Längsteilabschnitt ist am weitesten entfernt von der Förderanlage angeordnet.

Unter dem Begriff der Fördergeschwindigkeit der Förderanlage wird eine aktuell durch die Steuereinrichtung vorgegebene bzw. gesteuerte Fortbewegungsgeschwindigkeit des mit der Förderanlage beförderten Futters verstanden, also eine auf eine Zeiteinheit bezogene Streckenlänge. Die aktuell angesteuerte quantitative Größe der Fördergeschwindigkeit sowie die momentane Winkelstellung des Entnahmearms bestimmen, in welcher Position bzw. in welchem Längsteilabschnitt in dem Futtervorratsbehälter das Futter, das von dem Futterlager entnommen und von der mit der Fördergeschwindigkeit betriebenen Förderanlage befördert worden ist, nach dem Austritt aus der Förderanlage landet. Die Fördergeschwindigkeit muss mindestens so hoch gewählt bzw. vorgegeben sein, dass das beförderte Futter in den vordersten Längsabschnitt fällt, und darf maximal so hoch gewählt bzw. vorgegeben sein, dass das beförderte Futter in den hintersten Längsabschnitt fällt, ohne dass Futteranteile über den hinteren Rand des Futtervorratsbehälters hinaus ausgeworfen werden. Eine von der Steuervorrichtung veranlasste Erhöhung der Fördergeschwindigkeit bewirkt, dass das von der Förderanlage gegenwärtig beförderte Futter im Vergleich zu dem Abwurfbereich vor der Erhöhung der Fördergeschwindigkeit in einem hinteren Längsteilabschnitt des Futtervorratsbehälters abgeworfen wird. Dem entsprechend bewirkt eine Reduzierung der Fördergeschwindigkeit eine Veränderung eines Abwurfbereichs in Richtung der vorderen Längsteilabschnitte.

Die aktuelle Schwenkposition bezeichnet eine gegenwärtige Lage bzw. Position der Förderanlage, die - üblicherweise zusammen mit dem Entnahmearm und der daran angebrachten Entnahmevorrichtung - gegenüber einem Chassis des Futtermischwagens verschwenkbar bzw. drehbar gelagert ist. Zur Entnahme von Futter werden - häufig mittels Steuerung durch eine Absenkautomatikfunktion des Entnahmearms - die Entnahmevorrichtung und die Förderanlage aus einer obersten Lage bzw. Schwenkposition, die dem oberen Ende des Futterlagers entspricht, zu einer untersten Lage bzw. Schwenkposition am Boden des Futterlagers abgesenkt. Während dieses Absenkvorgangs entnimmt die Entnahmevorrichtung mittels eines Fräskopfes und/oder eines Schneidmessers Futter von dem Futterlager, und das entnommene Futter wird über die Förderanlage in den Futtervorratsbehälter transportiert.

Die Ermittlung einer momentanen Schwenkposition des Entnahmearmes kann auf unterschiedliche Weise und mit unterschiedlichen Arten von Schwenkpositons-Ermittlungseinrichtungen erfolgen.

Beispielsweise kann die mindestens eine Schwenkposition-Ermittlungseinrichtung als ein Drehwinkelsensor ausgebildet sein. Dann wird die aktuelle Schwenkposition der Förderanlage oder des Entnahmearms durch einen mit dem Drehwinkelsensor gemessenen Drehwinkel spezifiziert.

Alternativ dazu kann die mindestens eine Schwenkposition-Ermittlungseinrichtung als ein Abstandssensor zur Messung einer Distanz ausgebildet sein, die sich bei Verschwenkung der Förderanlage ändert, beispielsweise als Sensor zum Messen der Distanz zwischen einem schwenkbaren Referenzpunkt der Förderanlage und einer Bodenfläche des Futterlagers, wobei der Sensor als Ultraschallsensor und/oder als Lichtlaufzeitsensor ausgebildet sein kann. Eine Schwenkposition-Ermittlungseinrichtung auf Basis einer Wegmessung könnte auch durch Integration eines Wegmesssystem in die zum Anheben und Absenken des Entnahmearms vorgesehenen Hydraulikzylinder realisiert sein.

Weiterhin ist es möglich, dass die mindestens eine Schwenkposition-Ermittlungseinrichtung durch einen Umdrehungszähler ausgebildet ist, der eine Schwenkposition mittels Zählung einer Anzahl von Umdrehungen eines bei der Schwenkbewegung angetriebenen Bauteils ermittelt.

Außerdem kann die mindestens eine Schwenkposition-Ermittlungseinrichtung durch einen Kraftsensor und/oder Drucksensor und/oder Sensor zum Messen einer Größe eines elektrischen Stroms und/oder eines elektrischen Widerstands gebildet sein, sofern aus den mit dem Sensor gemessenen Größen eine eindeutige aktuelle Schwenkposition ermittelbar ist.

Im Fall einer aktivierten Absenkautomatik mit einer automatischen Schwenkung der Förderanlage von einer obersten Schwenkposition zu einer untersten Schwenkposition kann die mindestens eine Schwenkposition-Ermittlungseinrichtung bei bekannter Absenkgeschwindigkeit bzw. Absenkgesamtdauer die aktuelle Schwenkposition mittels Zeitmessung ab Absenkbeginn ermitteln.

Alternativ oder ergänzend kann als Schwenkposition-Ermittlungseinrichtung eine Sensoreinrichtung vorgesehen sein, die mittels Abstands- oder GPS-Sensoren eine momentane Schwenkposition des Entnahmearms im Raum oder gegenüber einer definierten Objekt misst.

Die mindestens eine Füllstandlängsverteilung-Ermittlungseinrichtung ist ausgebildet zum Ermitteln einer Füllstandlängsverteilung des in dem Futtervorratsbehälter befindlichen Futters in der oben erläuterten Längsrichtung des Futtermischwagens. Der Begriff des Füllstandes beschreibt eine aktuelle Füllhöhe in einem Längsteilabschnitt des Futtervorratsbehälters und spezifiziert durch eine für diesen Längsteilabschnitt ermittelte Zahleninformation, bis zu welcher Höhe dieser Längsteilabschnitt aktuell mit Futter befüllt ist. Die ermittelte Füllstandlängsverteilung bezieht sich auf eine zu einem Ermittlungszeitpunkt ermittelte bzw. gültige Gruppierung der aktuellen Füllstände aller Längsteilabschnitte. Wenn der gesamte Futtervorratsbehälter beispielsweise über seine gesamte Längsabmessung in fünf aneinandergrenzende Längsteilabschnitte unterteilt ist, so kann die Füllstandlängsverteilung als eine Gruppierung von fünf Zahlenwerten oder prozentualen Füllstandsorten spezifiziert sein. Beispielsweise kann der Füllstand im ersten (in Fahrtrichtung gesehen vordersten) Längsteilabschnitt 40% einer vordefinierten maximalen Füllstandshöhe betragen, im zweiten Abschnitt 45%, im dritten Abschnitt 50%, im vierten Abschnitt 55% und im fünften Abschnitt 60%. Eine solche Futterverteilung entspricht vereinfacht gesagt einem in Fahrtrichtung gesehen nach hinten ansteigendem Futterberg im Futtervorratsbehälter.

Die mindestens eine Füllstandlängsverteilung-Ermittlungseinrichtung kann ausgebildet sein zum Ermitteln der aktuellen Füllstandlängsverteilung mittels Messung der Füllstände als jeweilige Füllhöhen in allen Längsteilabschnitten des Futtervorratsbehälters.

Die mindestens eine Füllstandlängsverteilung-Ermittlungseinrichtung kann alternativ oder optional ausgebildet sein, die aktuelle Füllstandlängsverteilung mittels Messung einiger Füllstände einer Untermenge aller Längsteilabschnitte des Futtervorratsbehälters und Schätzung der nicht gemessenen Füllstände der anderen Längsteilabschnitte zu ermitteln.

Es ist auch möglich, dass die Füllstandlängsverteilung-Ermittlungseinrichtung ausgebildet ist, die Füllstandlängsverteilung nur per Schätzung unter Erfassung des Verlaufs der Fördergeschwindigkeit und einer gegebenenfalls variierten Schwenkposition sowie einer Kenntnis über Materialeigenschaften des Futters zu ermitteln, also ohne direkte Messung eines Füllstands in dem Futtervorratsbehälter.

Erfindungsgemäß ist zudem vorgesehen, dass die Steuereinrichtung ausgebildet ist zum Steuern der Fördergeschwindigkeit unter Einhaltung einer der Steuereinrichtung als Steuerungskriterium vorgegebenen Längsbefüllungscharakteristik. Die einzuhaltende Längsbefüllungscharakteristik spezifiziert im Sinn einer allgemeinen von der Steuereinrichtung bei der Steuerung der Fördergeschwindigkeit einzuhaltenden Zuteilungsvorschrift von Futter auf Längsteilabschnitte, beispielsweise welcher Längsteilabschnitt derzeit weiterhin und/oder als nächstes mit Futter befüllt werden soll und/oder welcher Längsteilabschnitt derzeit keinesfalls befüllt werden soll, um während des Befüllungsbetriebszustands eine gleichmäßige Befüllung aller Längsteilabschnitte zu gewährleisten und gleichzeitig zu verhindern, dass ein Futterüberwurf und/oder eine Überfüllung eines Längsteilabschnitts auftritt.

In dem oben beschriebenen Beispiel des in fünf Längsteilabschnitte unterteilten Futtervorratsbehälters und einer ermittelten aktuellen Füllstandlängsverteilung kann beispielsweise als Längsbefüllungscharakteristik vorgegeben sein:
- dass mit höchster Priorität die maximale Befüllung jedes Längsteilabschnitts auf eine vordefinierte Füllstandshöhe begrenzt ist,
- dass mit zweithöchster Priorität der niedrigst befüllte Längsteilabschnitt als nächstes befüllt werden soll,
- dass mit dritthöchster Priorität die maximal zulässige Abweichung von Füllständen benachbarter Längsteilabschnitte auf 5% begrenzt sein soll, und
- dass mit geringster Priorität die Fördergeschwindigkeit nur langsam verändert werden soll.

In diesem beispielhaften Szenario würde die Steuervorrichtung, nachdem zuletzt der hintere Längsteilabschnitt befüllt wurde, die Fördergeschwindigkeit relativ stark reduzieren, damit als nächstes die weiter vorne angeordneten Längsteilabschnitte mit Futter befüllt werden.

Der erfindungsgemäße Futtermischwagen gewährleistet, dass alle Längsteilabschnitte des Futtervorratsbehälters gleichmäßig mit Futter befüllt werden und ermöglicht somit optimale Mischbedingungen für das in den Futtervorratsbehälter transportierte Futter und eine Minimierung der erforderlichen Mischzeit. Zugleich verhindert der erfindungsgemäße Futtermischwagen zuverlässig ein Verstopfen der Förderanlage, einen unerwünschten Auswurf von Futter während des Befüllungsbetriebszustands und während eines reinen Mischbetriebszustands und ein Überwerfen von Futter über den hinteren Rand des Futtervorratsbehälters hinaus.

In einer Weiterbildung des erfindungsgemäßen Futtermischwagens ist vorgesehen, dass die Förderanlage in den Entnahmearm integriert ist. Bei dieser Weiterbildung ist die Förderanlage zusammen mit dem schwenkbaren Entnahmearm mit der Entnahmevorrichtung schwenkbar und kann in unterschiedlichen Schwenkpositionen von der Entnahmevorrichtung von dem Futterlager entnommenes Futter in den Futtervorratsbehälter befördern. Zum Ermitteln der aktuellen Schwenkposition der Förderanlage während des Befüllungsbetriebszustands ist mindestens eine Schwenkposition-Ermittlungsvorrichtung vorgesehen. Die Steuervorrichtung ist ausgebildet, die Fördergeschwindigkeit der Förderanlage in Abhängigkeit der ermittelten aktuellen Schwenkposition zu steuern.

Der Abwurfbereich der Förderanlage könnte sich ohne den erfindungsgemäßen Vorschlag bei einer Schwenkung der Förderanlage und somit einer Verlagerung von einer ersten Schwenkposition zu einer zweiten Schwenkposition unter Beibehaltung der Fördergeschwindigkeit zu einem unerwünschten Abwurfbereich verändern. Die Weiterbildung stellt sicher, dass diese Auswirkungen einer während des Befüllungsbetriebszustands vorgenommenen Verschwenkung der Förderanlage berücksichtigt werden. Somit gewährleistet diese Weiterbildung eine gleichmäßige Befüllung aller Längsabschnitte des Futtervorratsbehälters und verhindert zudem ein Überwerfen von Futter über den hinteren Rand des Futtermischwagens hinaus.

Die Füllstandlängsverteilungs-Ermittlungseinrichtung kann auf unterschiedliche Weise realisiert sein.

Beispielsweise können Messsensoren vorgesehen sein, die an unterschiedlichen Orten im Futtervorratsbehälter eine Füllstandshöhe ermitteln. Beispielsweise können in Längsrichtung des Futtermischwagen gesehen an mehreren Stellen übereinander angebrachte Sensorgruppierungen, beispielsweise Lichtschranken, angebracht sein. Mittels jeder dieser Sensorgruppierungen ist dann an mehreren Orten eine momentane Füllstandhöhe des im Vorratsbehälter befindlichen Futters ermittelbar.

Alternativ oder ergänzend hierzu können auch optische Sensoren, beispielsweise Kamerasensoren, zur vorzugsweise kontinuierlichen Ermittlung der Füllstandshöhe vorgesehen sein.

Weiterhin alternativ oder ergänzend können in Ergänzung zum Wiegesystem des Futtervorratsbehälters, oder, besonders bevorzugt, auf Basis des bereits vorhandenen Futtermischwagen-Wiegesystems, Wiegesensoren vorgesehen sein, die in der Lage sind, eine momentane Füllstandlängsverteilung des Futters im Futtervorratsbehälter zu ermitteln. Der Futtervorratsbehälter ist auf einer definierten Anzahl von Wiegesensoren gelagert. Werden die Werte der Wiegesensoren einzeln oder in sinnvollen Gruppen (z.B. paarig in Querrichtung) ausgewertet, lassen sich Rückschlüsse auf die Füllstandlängsverteilung ziehen (Sensorpaar vorne "schwerer" als Sensorpaar hinten => mehr Futter in vorderer Behälterhälfte).

In einer Weiterbildung des erfindungsgemäßen Futtermischwagens ist vorgesehen, dass die mindestens eine Füllstandlängsverteilung-Ermittlungseinrichtung ausgebildet ist, die aktuelle Füllstandlängsverteilung unter Berücksichtigung eines bisherigen Verlaufs der ermittelten Schwenkposition und/oder eines bisherigen Verlaufs der Fördergeschwindigkeit zu ermitteln.

Mit Erfassung und Kenntnis des bisherigen Verlaufs der Schwenkposition und/oder des bisherigen Verlaufs der Fördergeschwindigkeit ab Beginn des Befüllungsbetriebszustands kann die Steuereinrichtung die aktuellen Füllstände und die aktuelle Füllstandlängsverteilung bei einem Ausfall der Sensoren der Füllstandlängsverteilung-Ermittlungseinrichtung mittels bloßer Schätzung auf Grundlage bekannter Futtereigenschaften, wie beispielsweise dem Flugverhalten des vom Futterlager entnommenen Futters, ermitteln, ohne dass der Befüllungsbetriebszustand fehlerbedingt abgebrochen werden muss.

Die Ermittlung der aktuellen Füllstandlängsverteilung mittels einer temporären und/oder partiellen Schätzung bietet den Vorteil, dass die ständige Funktionsbereitschaft der Sensoren der Füllstandlängsverteilung-Ermittlungseinrichtung und die Korrektheit ihrer Messwerte nicht gegeben sein müssen.

Mittels Nutzung dieser Weiterbildung kann auch bewusst konstruktionstechnisch vorgesehen sein, dass ein Sensor, der dem Längsteilabschnitt zugeordnet ist, der aktuell mit Futter befüllt wird, während der Befüllung dieses Längsteilabschnitts keine Messung des Füllstands vornehmen kann oder soll. Während der Dauer der Befüllung des aktuell befüllten Längsteilabschnitts des Futtervorratsbehälters kann der aktuelle Füllstand dieses Längsteilabschnitts unter Kenntnis des bisherigen Verlaufs der ermittelten Schwenkposition und/oder des bisherigen Verlaufs der Fördergeschwindigkeit und sinnvollerweise mit Berücksichtigung der tatsächlich gemessenen Füllstände anderer Längsteilabschnitte präzise geschätzt werden. In Fortführung dieses Aspekts wird eine Weiterbildung eines Futtermischwagens vorgeschlagen, bei dem die Füllstandlängsverteilung-Ermittlungseinrichtung ohne Sensoren und daher als reine Berechnungseinrichtung ausgestaltet ist, deren Funktionalität in die Steuereinheit integriert werden kann.

Mit der vorgeschlagenen Weiterbildung kann die gleichmäßige Befüllung des Futtervorratsbehälters auch bei einem Ausfall oder Entfall von Sensoren der Füllstandlängsverteilung-Ermittlungseinrichtung gewährleistet werden.

In einer Weiterbildung des erfindungsgemäßen Futtermischwagens ist vorgesehen, dass die Steuereinrichtung mit einer elektronischen Datenbank mit darin gespeicherten Datensätzen gekoppelt oder koppelbar ist. Jeder Datensatz enthält eine futterkomponentenspezifische und/oder futterlagerspezifische und/oder geokoordinatenspezifische Zuordnung von Soll-Fördergeschwindigkeiten zu Ist-Schwenkpositionen. Ferner ist die Steuereinrichtung ausgebildet zum Steuern der Fördergeschwindigkeit mit Verwendung eines von einem Benutzer oder automatisch durch die Steuereinrichtung ausgewählten Datensatzes der Datenbank, insbesondere zur Anpassung der der ermittelten Schwenkposition zugeordneten Soll-Fördergeschwindigkeit.

Mit dieser Weiterbildung wird eine gezielte Anpassung an die tatsächlichen Futterentnahme- und Abwurfbedingungen ermöglicht, was in einer Optimierung der Befüllung des Futtermischwagens resultiert.

In einer Fortbildung der zuletzt beschriebenen Weiterbildung des erfindungsgemäßen Futtermischwagens ist vorgesehen, dass die Steuereinrichtung ausgebildet ist zum Adaptieren der Soll-Fördergeschwindigkeiten des Datensatzes während des Befüllungsbetriebszustands. Die Steuerungseinrichtung kann auch ein selbstlernendes System umfassen. Beispielsweise können in einer ersten Stufe (nicht selbstlernendes System) momentan ermittelte Sensordaten der Füllstandlängsverteilungs-Einrichtung als IstWerte berücksichtigt und mit in der Datenbank gespeicherten Informationen und/oder Sollwerten abgeglichen und hieraus Steuerbefehle zur für die Fördergeschwindigkeit der Förderanlage abgeleitet werden. In einer zweiten Stufe (selbstlernendes System) können zudem aus den Effekten der Steuerbefehle der ersten Stufe - wiederum mittels Sensoren - Daten ermittelt werden, die einen Rückschluss darauf zulassen, wie ein Steuerbefehl optimiert werden kann um den gewünschten Effekt schneller und/oder genauer zu realisieren.

In einer Weiterbildung des erfindungsgemäßen Futtermischwagens ist vorgesehen, dass die von der Steuereinrichtung als Steuerungskriterium einzuhaltende Längsverteilungscharakteristik derart vorgegeben ist, dass die maximal zulässige Abweichung der Füllstande der Längsteilabschnitte des Futtervorratsbehälters während des Befüllungsbetriebszustands höchstens 30%, bevorzugt 20%, besonders bevorzugt 10%, beträgt.

In einer Weiterbildung des erfindungsgemäßen Futtermischwagens ist vorgesehen, dass die mindestens eine Füllstandlängsverteilung-Ermittlungseinrichtung eine Gruppierung von individuellen Längsteilabschnitten des Futtervorratsbehälters zugeordneten Abstandssensoren und/oder Lichtschranken umfasst. Ferner ist vorgesehen, dass die Füllstandlängsverteilung-Ermittlungseinrichtung ausgebildet ist zum Ermitteln einer aktuellen Füllstandlängsverteilung auf Grundlage von Signalen der Abstandssensoren und/oder Lichtschranken.

In einer Weiterbildung des erfindungsgemäßen Futtermischwagens ist vorgesehen, dass die mindestens eine Füllstandlängsverteilung-Ermittlungseinrichtung mindestens einen optischen Sensor, beispielsweise einen Kamerasensor, umfasst. Ferner ist vorgesehen, dass die Füllstandlängsverteilung-Ermittlungseinrichtung ausgebildet ist zum Ermitteln einer aktuellen Füllstandlängsverteilung auf Grundlage von durch den mindestens einen optischen Sensor ermittelten Bildinformationen.

In einer Weiterbildung des erfindungsgemäßen Futtermischwagens ist vorgesehen, dass die mindestens eine Füllstandlängsverteilung-Ermittlungseinrichtung mindestens einen Tiefeninformationen-Kamerasensor umfasst. Ferner ist vorgesehen, dass die Füllstandlängsverteilung-Ermittlungseinrichtung ausgebildet ist zum Ermitteln einer aktuellen Füllstandlängsverteilung auf Grundlage von durch den mindestens einen Tiefeninformationen-Kamerasensor ermittelten Tiefeninformationen.

Eine derartiger Tiefeninformationen-Kamerasensor ist auch als ToF-Sensor (ToF = Time-of-Flight) bekannt, der zusätzlich zu einer kamerasensorüblichen pixelbasierten Bilderfassung Tiefeninformationen mittels Laufzeitmessungen von Lichtimpulsen gewinnt, wobei die derart gewonnenen Tiefeninformationen einem jeweiligen Bildpixel als jeweilige Distanzinformation zugeordnet sind.

In einer weiteren Weiterbildung des erfindungsgemäßen Futtermischwagens ist vorgesehen, dass die mindestens eine Füllstandlängsverteilung-Ermittlungseinrichtung eine Gruppierung von individuellen Längsteilabschnitten des Futtervorratsbehälters zugeordneten Wiegesensoren umfasst, und die Füllstandlängsverteilung-Ermittlungseinrichtung ausgebildet ist zum Ermitteln einer aktuellen Füllstandlängsverteilung auf Grundlage von Signalen der Wiegesensoren. Besonders vorteilhaft ist es, wenn etwaige bereits in einem bestehenden Wiegesystem des Futtermischwagens vorgesehene Wiegesensoren für diesen zusätzlichen Zweck genutzt werden. Mittels der Wiegesensoren wird dann nicht nur das Gewicht der im Futtervorratsbehälter momentan enthaltenen Futtermasse bestimmt, sondern durch einzelne - oder auch paarweise - Auswertung von Wiegesensordaten zudem die Füllstandlängsverteilung des im Futtervorratsbehälter befindlichen Futters.

Ferner ist vorgesehen, dass die Steuereinrichtung ausgebildet ist zum Steuern der Fördergeschwindigkeit in Abhängigkeit von der ermittelten Futtermasse.

In einer Weiterbildung des erfindungsgemäßen Futtermischwagens ist vorgesehen, dass der Futtermischwagen mit mindestens einer Flugcharakteristik-Ermittlungseinrichtung zum Ermitteln, während des Befüllungsbetriebszustands, einer Flugcharakteristik des von der Förderanlage in den Futtervorratsbehälter ausgeworfenen Futters versehen ist. Ferner ist vorgesehen, dass die Steuereinrichtung ausgebildet ist zum Steuern der Fördergeschwindigkeit in Abhängigkeit von der ermittelten Flugcharakteristik.

In einer Weiterbildung des erfindungsgemäßen Futtermischwagens ist vorgesehen, dass die Steuereinrichtung ausgebildet ist zum Steuern eines Betriebsparameters der Entnahmevorrichtung, wie beispielsweise einer Umdrehungszahl der Fräse oder einer Absenkgeschwindigkeit der Entnahmevorrichtung, in Abhängigkeit von der ermittelten Schwenkposition und/oder der Fördergeschwindigkeit und/oder der ermittelten Füllstandlängsverteilung und/oder der ermittelten Flugcharakteristik, insbesondere beim Ausführen eines Absenkautomatikbetriebs.

In einer Weiterbildung des erfindungsgemäßen Futtermischwagens ist vorgesehen, dass die Steuereinrichtung ausgebildet ist zum Ermitteln und/oder Empfangen einer aktuellen Fortbewegungsgeschwindigkeitsinformation des Futtermischwagens während des Befüllungsbetriebszustands. Ferner ist vorgesehen, dass die Steuereinrichtung ausgebildet ist zum Steuern der Fördergeschwindigkeit in Abhängigkeit der Fortbewegungsgeschwindigkeitsinformation.

Üblicherweise steht der Futtermischwagen während des Befüllungsbetriebszustands still, wird also nicht fortbewegt. Die vorgeschlagene Weiterbildung ist auf den Sonderfall gerichtet, dass der Futtermischwagen für eine Restgutaufnahme eines nahezu entleerten Futterlagers ähnlich wie ein Staubsauger mit dauerhaft auf Bodenhöhe abgesenktem Entnahmearm bzw. Entnahmevorrichtung über die mit Futterresten bedeckte Bodenfläche des Futterlagers gefahren wird, um die Futterreste in den Futtervorratsbehälter zu befördern.

Die erfindungsgemäße Aufgabe wird auch gelöst durch ein Verfahren zur Steuerung der Befüllung eines oben ausführlich erläuterten erfindungsgemäßen Futtermischwagens mit den Merkmalen des Anspruchs 13.

Zur Lösung der Aufgabenstellung sieht das erfindungsgemäße Verfahren vor, dass der Futtermischwagen während des Befüllungsbetriebszustands eine aktuelle Schwenkposition der Förderanlage und/oder eine aktuelle Füllstandlängsverteilung des in dem Futtervorratsbehälter befindlichen Futters in einer Längsrichtung des Futtermischwagens ermittelt. Ferner ist bei dem Verfahren vorgesehen, dass die Steuereinrichtung während des Befüllungsbetriebszustands die Fördergeschwindigkeit und die Schwenkposition der Förderanlage auf Basis einer als Steuerungskriterium vorgegebenen Längsbefüllungscharakteristik derart steuert, dass während des Befüllungsbetriebszustands ein Futterüberwurf und eine Überfüllung eines Längsteilabschnitts des Futtervorratsbehälters verhindert werden.

Die für den erfindungsgemäßen Futtermischwagen eingeführten und erläuterten Begriffsdefinitionen gelten auch für das vorgestellte Verfahren. Mit dem vorgestellten erfindungsgemäßen Verfahren können dieselben Vorteile wie mit dem erfindungsgemäßen Futtermischwagen realisiert werden.

Auf Basis des vorgestellten Futterwischwagens und einer seiner Weiterbildungen oder beliebiger Kombinationen dieser Weiterbildungen beschriebene Vorrichtungsmerkmale sind auch Merkmale des vorgestellten Verfahrens und einer seiner Weiterbildungen und umgekehrt. Vorrichtungsbasiert beschriebene Merkmale der Erfindung sollen auch als erfindungsgemäße Merkmale des Verfahrens gelten und umgekehrt. Folglich ergeben sich weitere vorteilhafte Weiterbildungen des erfindungsgemäßen Verfahrens aus den beschriebenen Weiterbildungen des Futtermischwagens.

Weitere, die Erfindung verbessernde Maßnahmen werden nachstehend mit der Beschreibung von bevorzugten Ausführungsbeispielen der Erfindung anhand der Figuren näher dargestellt.

Die Figuren zeigen:
- Fig. 1: zeigt einen Futtermischwagen gemäß einem ersten Ausführungsbeispiel der Erfindung während eines Befüllungsbetriebszustands des Futtermischwagens;
- Fig. 2: zeigt einen Futtermischwagen gemäß einem zweiten Ausführungsbeispiel der Erfindung während eines Befüllungsbetriebszustands des Futtermischwagens;
- Fig. 3: zeigt eine schematische Darstellung eines Futtermischwagens und einige an dem Futtermischwagen vorgesehene Sensoren und
- Fig. 4: zeigt einen Futtermischwagen gemäß einem dritten Ausführungsbeispiel der Erfindung während eines Befüllungsbetriebszustands des Futtermischwagens.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können. Die Erfindung erstreckt sich ausdrücklich auch auf solche Ausführungsformen, welche nicht durch Merkmalskombinationen aus expliziten Rückbezügen der Ansprüche gegeben sind, womit die offenbarten Merkmale der Erfindung, soweit dies technisch sinnvoll ist, beliebig miteinander kombiniert sein können. Die in den Figuren dargestellten Ausführungsbeispiele haben somit nur beschreibenden Charakter und sind nicht dazu gedacht, die Erfindung in irgendeiner Form einzuschränken.

Die im Weiteren verwendeten Begriffe: "obere", "oben", "untere", "linke" oder "rechte" beziehen sich auf die in der Zeichnung dargestellte Anordnung der Komponenten des Futtermischwagens während des Befüllungsbetriebszustands des Futtermischwagens.

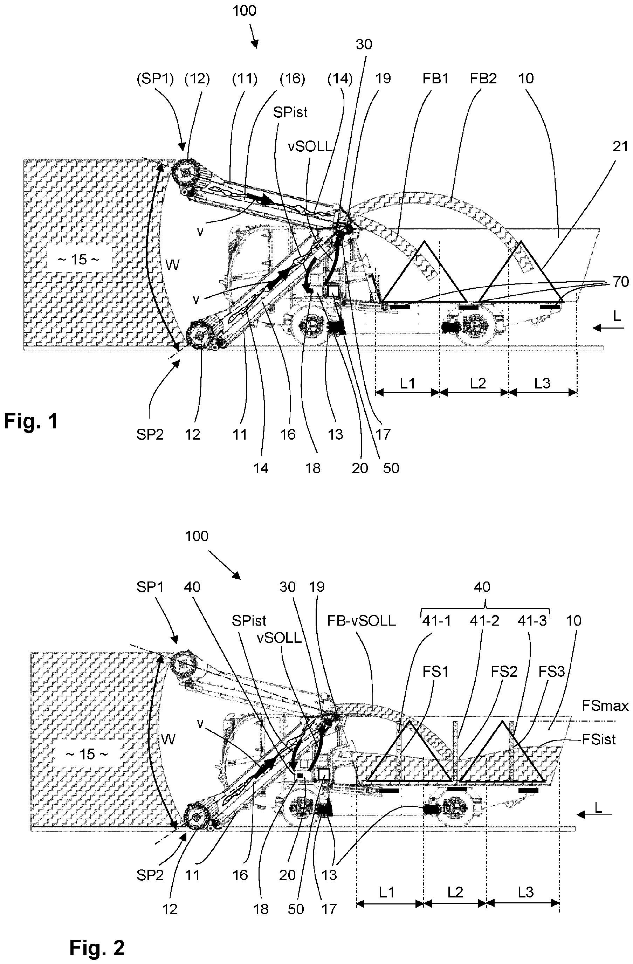

Figur 1 zeigt einen Futtermischwagen 100 gemäß einem ersten Ausführungsbeispiel der Erfindung. Der selbstfahrende Futtermischwagen 100 weist eine zum Antrieb der Vorderräder und der Hinterräder vorgesehene Antriebseinrichtungen 13 auf. Der Futtermischwagen 100 umfasst ferner einen Futtervorratsbehälter 10 zur Aufnahme von Futter 14. Im dargestellten Ausführungsbeispiel umfasst der Futtermischwagen 100 zwei vertikale Mischschnecken 21, die in der Abbildung in Form von Dreiecken angedeutet sind. Der Futtervorratsbehälter 10 wird von Wiegesensoren getragen, die Bestandteile einer Wiegeeinrichtung 70 sind und mittels derer das Gewicht der im Futtervorratsbehälter enthaltenen Futtermasse bestimmbar ist.

Während des Befüllungsbetriebszustands des Futtermischwagens 100 wird der Futtervorratsbehälter 10 über eine Förderanlage 16 mit Futter 14 befüllt, wobei zu einem jeweiligen Zeitpunkt das Futter 14 entlang einer Längsrichtung L des Futtermischwagens nur in einen Teilbereich des Futtervorratsbehälters 10 ausgeworfen wird. Zur Verdeutlichung dieser möglicherweise in der Längsrichtung L ungleichmäßig verteilten Befüllung ist der in Fig. 1 dargestellte Futtervorratsbehälter 10 bzw. dessen Aufnahmebereich beispielhaft und ohne Beschränkung darauf entlang der Längsrichtung L in drei in etwa gleich große benachbarte und aneinander angrenzende Längsteilabschnitte L1, L2 und L3 unterteilt.

Der Futtermischwagen 100 ist an seiner Vorderseite mit einem schwenkbaren Entnahmearm 11 mit einer am vorderen Ende des Entnahmearms 11 angeordneten Entnahmevorrichtung 12 versehen. Im dargestellten Ausführungsbeispiel ist die Entnahmevorrichtung als eine rotierende Fräsvorrichtung zur Entnahme von Futter 14 von einem Futterlager 15 ausgebildet. Alternativ zu einer Fräsvorrichtung kann die Entnahmevorrichtung 12 auch in Form eines an sich bekannten Schneidbügels ausgeführt sein. Ein solcher Schneidbügel in der Regel mehrere Messer, die vorzugsweise u-förmig am vorderen Ende des Entnahmearms 11 angeordnet sind und bei einer Abwärtsbewegung des Schneidbügels vereinfacht gesagt eine Futterscheibe aus dem Futter-Vorratslager 15 abschneiden.

Der Entnahmearm 11 ist um eine horizontal verlaufende Drehachse 19 in einer Vertikalrichtung, also einer Abwärts- bzw. Aufwärtsrichtung mit Annäherung bzw. Entfernung zur Erdbodenfläche, schwenkbar, so dass das vordere Ende des Entnahmearms 11 zwischen einer Schwenkposition SP1 einer maximalen Anhebung und einer Schwenkposition SP2 einer maximalen Absenkung entlang einer als Pfeil mit zwei Endspitzen abgebildeten Schwenkpositionskurve SP nach oben und unten bewegbar ist.

In den Entnahmearm 11 ist eine Förderanlage 16 integriert, die zusammen mit dem Entnahmearm 11 schwenkbar ist. Der Futtermischwagen hat einen einzigen Entnahmearm 11. Zur besseren Veranschaulichung der obersten und untersten Schwenkposition SP1, SP2 ist der Entnahmearm 11 in den Figuren 1, 2 und 4 in beiden Schwenkpositionen dargestellt. In Fig. 1 ist der Entnahmearm 11 in der Schwenkposition SP1 mittels eingeklammerten Bezugszeichen angedeutet.

Bei dem in Fig. 1 dargestellten Ausführungsbeispiel umfasst der Futtermischwagen 100 eine in den Förderarm 11 integrierte Förderanlage 16. Grundsätzlich ist es jedoch auch möglich, den Futtermischwagen 100 nicht mit einer in den Förderarm integrierten Förderanlage 16, sondern mit einer als Schrägförderer ausgeführten, im vorderen Bereich des Futtermischwagens angebrachten Förderanlage (nicht dargestellt) vorzusehen. Eine solche Förderanlage ist in Bezug auf den Futtervorratsbehälter im Wesentlichen ortsfest an einem Rahmen des Futtermischwagens und lediglich geringfügig anhebbar und absenkbar. Das Anheben und Absenken der als Schrägförderer ausgeführten Förderanlage dient bei einer solchen Ausführung nicht dazu, die Bewegung des Schrägförderers an die Bewegung des Entnahmearms anzupassen, sondern lediglich dazu, den Schrägförderer während des Fahrbetriebes von einem Ort zu einem anderen Ort soweit anzuheben, dass eine ausreichende Bodenfreiheit im Fahrbetrieb gewährleistet ist. Ist der Futtermischwagen an einem Entnahmeort angekommen, wird der Schrägförderer auf Bodenniveau abgesenkt und an die untere Entnahmekante des Futterlagers 15 herangeführt. Von der Entnahmevorrichtung 12 abgeschnittenes Futter 14 fällt dann auf den Schrägförderer und wird von diesem in den Futtervorratsbehälter 10 gefördert.

Die in Fig. 1 gezeigte Förderanlage 16 ist ausgebildet und angeordnet um das mittels der Entnahmevorrichtung 12 von dem Futterlager 15 entnommene Futter 14 mit einer steuerbaren Fördergeschwindigkeit v in den Futtervorratsbehälter 10 zu transportieren bzw. auszuwerfen. Zum Steuern der Fördergeschwindigkeit v der Förderanlage 16 auf eine Soll-Fördergeschwindigkeit vSOLL ist der Futtermischwagen 100 mit einer Steuereinrichtung 20 und einem Datenspeicher 18 versehen, in welchem entsprechende Daten für die zu steuernde Fördergeschwindigkeit vSOLL gespeichert sind. Die Förderanlage 16 wird durch einen Förderanlagenantrieb 17 mit der von der Steuereinrichtung 20 vorgegebenen Soll-Fördergeschwindigkeit vSOLL angetrieben.

Eine Flugbahn des von der Förderanlage 16 in den Futtervorratsbehälter 10 ausgeworfenen Futters 14 und somit auch ein Abwurfbereich, in dem das Futter 14 am Ende der Flugbahn in dem Futtervorratsbehälter 10 landet, hängen von der aktuellen Schwenkposition SPist und von der aktuellen Fördergeschwindigkeit v ab.

Wie in Fig. 1 dargestellt, wird im Fall eines in die unterste Schwenkposition SP2 geschwenkten Entnahmearms 11 mit integrierter Förderanlage 16, die das Futter 14 mit einer hohen Geschwindigkeit v transportiert, das Futter entlang einer Flugbahn FB2 in einen hintersten Längsteilabschnitt L3 des Futtervorratsbehälters 10 befördert. Wie in Fig. 1 weiterhin dargestellt, wird im Fall eines in die oberste Schwenkposition SP1 geschwenkten Entnahmearms 11 mit integrierter Förderanlage 12, die das Futter 14 mit einer Geschwindigkeit v transportiert, das Futter entlang einer Flugbahn FB1 in einen vordersten Längsteilabschnitt L1 des Futtervorratsbehälters 10 befördert.

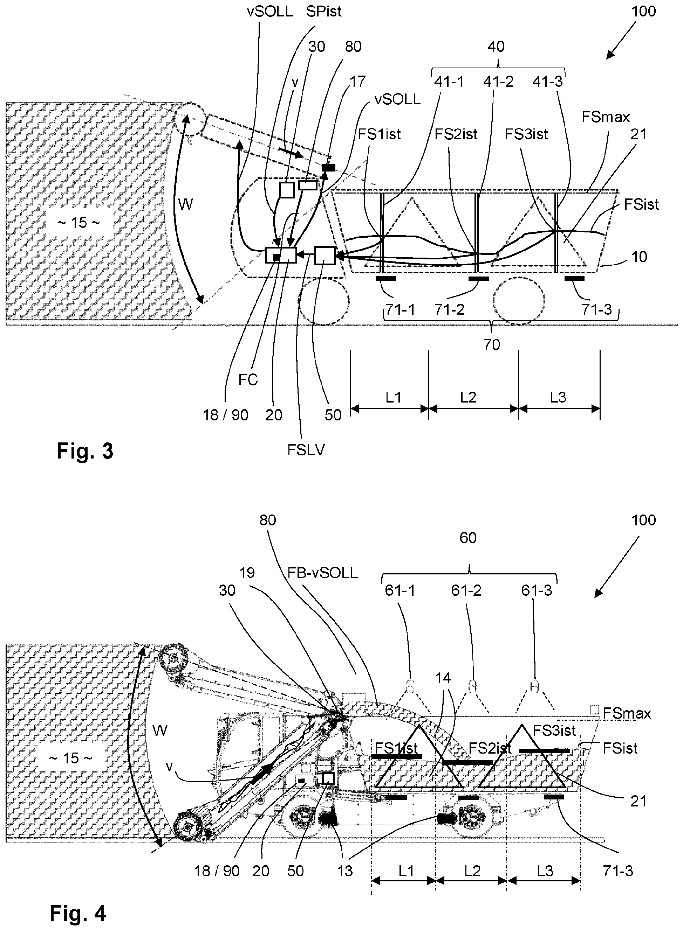

Das in Fig. 1 veranschaulichte Ausführungsbeispiel des Futtermischwagens 100 ist mit einer Schwenkposition-Ermittlungseinrichtung 30 versehen, die ausgebildet ist, während des Befüllungsbetriebszustands die aktuelle Schwenkposition SPist der Förderanlage 16 zu ermitteln (vgl. Fig. 3). Bei dem dargestellten Ausführungsbeispielgemäß Fig. 1 ist die Schwenkposition-Ermittlungseinrichtung 30 als Drehwinkelsensor ausgebildet, so dass die aktuelle Schwenkposition SPist mittels Messung eines Drehwinkels W des Entnahmearms 11 um die Drehachse 19 ermittelt wird. Ferner ist die Steuereinrichtung 20 ausgebildet, während des Befüllungsbetriebszustands des Futtermischwagens 100 die Fördergeschwindigkeit vSOLL der Förderanlage 16 in Abhängigkeit der durch die Schwenkposition-Ermittlungseinrichtung 30 gemessenen Schwenkposition SPist unter Einhaltung einer der Steuervorrichtung 20 als Steuerungskriterium vorgegebenen Längsbefüllungscharakteristik derart zu steuern, dass während des Befüllungsbetriebszustands ein Futterüberwurf und eine Überfüllung der Längsabschnitte L1, L2, L3 des Futtervorratsbehälters 10 verhindert werden.

Das in Fig. 1 abgebildete Ausführungsbeispiel ist nicht mit Sensoren zum direkten Messen aktueller Füllstände bzw. Füllhöhen in den Längsteilabschnitten L1 bis L3 des Futtervorratsbehälters 10 ausgerüstet. Das Ausführungsbeispiel von Fig. 1 kann aber trotzdem mit einer Füllstandlängsverteilung-Ermittlungseinrichtung versehen sein, welche die aktuelle Füllstandlängsverteilung unter Berücksichtigung eines seit Beginn des Befüllungsbetriebszustands erfassten Verlaufs der ermittelten Schwenkposition SPist und/oder eines seit Beginn des Befüllungsbetriebszustands erfassten Verlaufs der gesteuerten Fördergeschwindigkeit vSOLL nur per Schätzung ermittelt, und die Fördergeschwindigkeit vSOLL zusätzlich in Abhängigkeit der geschätzten aktuellen Füllstandlängsverteilung steuert. Eine derartige optionale Füllstandlängsverteilung-Ermittlungseinrichtung und aktuelle Füllstände der Längsabschnitte L1 bis L3 in dem Futtervorratsbehälter 10 sind aus Gründen einer besseren Übersichtlichkeit in Fig. 1 nicht veranschaulicht.

Figur 2 zeigt einen Futtermischwagen 100 gemäß einem zweiten Ausführungsbeispiel der Erfindung. Der Futtermischwagen 100 von Fig. 2 weist ähnliche Komponenten wie der in Fig. 1 veranschaulichte Futtermischwagen 100 auf. Aus Übersichtlichkeitsgründen ist in Fig. 2 die mögliche oberste Schwenkposition SP1 des Entnahmearms 11 nur grob angedeutet.

Im Unterschied zu dem oben mit Verweis auf Fig. 1 erläuterten ersten Ausführungsbeispiel ist das zweite Ausführungsbeispiel mit Sensoren zum direkten Messen aktueller Füllstände bzw. Füllhöhen in den Längsteilabschnitten L1 bis L3 des Futtervorratsbehälters 10 versehen.

Das in Fig. 2 abgebildete zweite Ausführungsbeispiel des Futtermischwagens 100 weist eine Füllstandlängsverteilung-Ermittlungseinrichtung 50 auf. Diese Füllstandlängsverteilung-Ermittlungseinrichtung 60 ist mit einer Sensor-Gruppierung 40 von den individuellen Längsteilabschnitten L1, L2 und L3 des Futtervorratsbehälters 10 zugeordneten Messsensoren 41-1, 41-2 bzw. 41-3 versehen bzw. gekoppelt, die sich in einem jeweiligen zugeordneten Längsteilabschnitt L1, L2 bzw. L3 entlang einer vertikalen Richtung, also entlang der Richtung der zu messenden Füllstände bzw. Füllhöhen, erstrecken, wie in Fig. 2 schematisch veranschaulicht. Jeder der Messsensoren 41-1, 41-2 und 42-3 weist eine Mehrzahl von entlang der vertikalen Richtung übereinander angeordneten Abstandsensoren und/oder Lichtschranken auf. Diese übereinander angeordneten Abstandsensoren und/oder Lichtschranken eines jeweiligen Messsensors 41-1, 41-2, 41-3 sind zum Durchführen einer Abstandsmessung bzw. Lichtdurchlässigkeitsmessung in einem jeweiligen Längsteilabschnitt Lx entlang der Querrichtung des Futtermischwagens 100 angeordnet. Unter Lx ist ein jeweils momentan relevanter Längsteilabschnitt L1, L2 oder L3 zu verstehen.

In der Darstellung von Fig. 2 ist der Futtervorratsbehälter 10 bereits mit Futter ca. zur Hälfte mit Futter 14 befüllt, wobei die reale Füllhöhe entlang der Längsrichtung L variiert, wie durch die Füllhöhenverlaufskurve FSist dargestellt. In Fig. 2 sind zudem ermittelte aktuelle Füllstände FS1, FS2 und FS3 der zugeordneten Längsteilabschnitte L1, L2 bzw. L3 dargestellt. Beispielsweise ergeben die Messungen für den Längsteilabschnitt L2 mit den unteren Abstandssensoren des Messsensors 41-2, dass der gemessene Abstand deutlich geringer ist als der bekannte Abstand ohne Befüllung, also einem Abstand einander gegenüberliegender Seitenwände des Futtervorratsbehälters 10, welchen im dargestellten Beispiel die oberen Abstandssensoren des Messsensors 41-2 per Messung ermitteln. Bei einer Ausgestaltung mit mehreren Lichtschranken pro Messsensor 41-2 ergeben die jeweiligen Messungen im Längsteilabschnitt L2 nur eine Lichtdurchlässigkeit für die oberen Lichtschranken, so dass der Füllstand FS2 eindeutig per Messung ermittelt werden kann. Auf gleiche Weise werden die aktuellen Füllstände FS1 in L1 und FS3 in L3 gemessen. Die Messsensoren 41-1, 41-2, 41-3 ermöglichen zudem eine Messung, ob in einem der Längsteilabschnitte der maximal zulässige Füllstand FSmax erreicht oder überschritten worden ist.

Da während des Befüllungsbetriebszustands die Messungen durch von der Förderanlage 16 ausgeworfenes Futter beeinträchtigt werden könnten, kann es auch vorgesehen sein, dass die Messung eines aktuellen Füllstands FS nur in den Längsteilabschnitten erfolgt, denen während der gegenwärtig vorgenommenen Messung kein oder nur sehr wenig Futter zugeführt wird. Der aktuelle Füllstand eines Längsteilabschnitts, der gegenwärtig mit Futter aufgefüllt wird, kann vorläufig geeignet geschätzt und im Anschluss durch ein Messergebnis ersetzt werden.

Die Füllstandlängsverteilung-Ermittlungseinrichtung 50 generiert aus den gemessenen und/oder geschätzten aktuellen Füllständen FS1, FS2 und FS3 eine aktuelle Füllstandlängsverteilung FSLV, die an die Steuereinrichtung 20 übermittelt wird. Im gezeigten Beispiel stellt die Steuereinrichtung 20 auf Grundlage der ermittelten Füllstandlängsverteilung FSLV fest, dass zur Einhaltung der der Steuervorrichtung 20 vorgegebenen Längsbefüllungscharakteristik einer ausreichend gleichmäßigen Befüllung aller Längsteilabschnitte L1, L2 und L3 mit der Vorgabe einer maximal zulässigen Abweichung der Füllstände der Längsteilabschnitte voneinander von höchstens 30%, als nächstes der aktuell am niedrigsten befüllte Längsteilabschnitt L2 mit Futter 14 aufgefüllt werden muss. Folglich steuert die Steuereinrichtung 20 unter Berücksichtigung der durch die Schwenkposition-Ermittlungseinrichtung 30 ermittelten aktuellen Schwenkposition SPist, die in Fig. 2 der Position der untersten Absenkung SP2 entspricht, und der ermittelten Füllstandlängsverteilung FSLV die Fördergeschwindigkeit auf einen Wert vSOLL, so dass das von der Förderanlage 16 in den Futtervorratsbehälter 10 ausgeworfene Futter einer in Fig. 2 veranschaulichten Flugbahn FB-vSOLL näherungsweise folgt und daher nur in den Längsteilabschnitt L2 befördert wird, so dass dessen Füllstand FS2 zunimmt.

Figur 3 zeigt einen Futtermischwagen 100 in einer schematischen Darstellung mit ebenfalls schematisch angedeuteten Sensoren und Steuerbefehlen. Dargestellt ist sowohl eine Ausrüstung des Futtermischwagens 100 mit einer durch Sensoren 41-1, 41-2 und 41-3 ausgebildeten Sensorgruppierung 40 als auch eine Ausrüstung mit einer durch Wiegesensoren 71-1, 71-2 und 71-3 ausgebildeten Wiegeeinrichtung 70. Sowohl die Sensorgruppierung 40 als auch die Wiegeeinrichtung 70 sind in der Lage, die zur Ermittlung einer Füllstandlängsverteilung erforderlichen Daten zu erfassen. Unabhängig davon, ob die Daten mittels der Sensorgruppierung 40 oder der Wiegeeinrichtung 70 ermittelt wurden, werden sie an die Füllstandlängsverteilung-Ermittlungseinrichtung 50 übertragen. Die Füllstandlängsverteilung-Ermittlungseinrichtung 50 bildet im dargestellten Ausführungsbeispiel eine separate Einheit, sie kann aber auch in die Steuereinrichtung 20 integriert sein. Die von der Füllstandlängsverteilung-Ermittlungseinrichtung 50 zusammengefassten und/oder verarbeiteten Daten werden an die Steuereinrichtung 20 übermittelt und von dieser mit vorgegebenen Soll- und/oder Maximalwerten verglichen.

Weiterhin werden in der Steuereinrichtung 20 eine von der Schwenkpositions-Ermittlungseinrichtung 30 auf Basis des Drehwinkels W ermittelte Schwenkposition SPist sowie die Fördergeschwindigkeit v der Förderanlage 16 genutzt, um nach Art eines Regelkreises eine Fördergeschwindigkeit vSOLL für die Fördereinrichtung zu errechnen, die geeignet ist, die Füllstandsverteilung des Futters im Vorratsbehälter an eine gewünschte Soll-Füllstandsverteilung anzupassen. Demzufolge wird mittels von der Steuereinrichtung 20 an den Förderanlagenantrieb 17 übermittelter Steuerbefehle die Fördergeschwindigkeit v so verändert, dass das von der Förderanlage 16 geförderte Futter 14 eine für die gewünschte Verteilung im Futtervorratsbehälter gewünschte Flugbahn FBvSOLL für die Sollfördergeschwindigkeit vSOLL beschreibt.

Figur 4 zeigt einen Futtermischwagen 100 gemäß einem dritten Ausführungsbeispiel der Erfindung. Der Futtermischwagen 100 von Fig. 4 weist ähnliche Komponenten wie der in Fig. 2 veranschaulichte Futtermischwagen 100 auf. Aus Übersichtlichkeitsgründen ist in Fig. 4 die mögliche oberste Schwenkposition SP1 des Entnahmearms 11 nur grob angedeutet. Das in Fig. 4 veranschaulichte Ausführungsbeispiel des Futtermischwagens 100 ist mit einer Schwenkposition-Ermittlungseinrichtung 30, einer Füllstandlängsverteilung-Ermittlungseinrichtung 50 und einer Sensorgruppierung 60 mit drei optischen Sensoren, bei Tiefeninformation-Kamerasensoren 61-1, 61-2, 61-3, einer Futterwiegeeinrichtung 70, einer Flugcharakteristik-Ermittlungseinrichtung 80 und einer elektronischen Datenbank 90 versehen.

Die Sensorgruppierung 60 umfasst drei Tiefeninformation-Kamerasensoren 61-1, 61-2, 61-3 zur Ermittlung einer Füllstandlängsverteilung FSLV des über die drei Längsteilabschnitte L1, L2 und L3 verteilt angeordneten Futters in dem Futtervorratsbehälter 10. Jedem der Langsteilabschnitte L1, L2 und L3 des Futtervorratsbehälters ist ein jeweiliger Tiefeninformation-Kamerasensor 61-1, 61-2 bzw. 61-3 zugeordnet, dessen jeweiliger Erfassungsbereich, in Fig. 4 durch gestrichelte Strahlenkeulen angedeutet, auf den jeweiligen Längsteilabschnitt ausgerichtet ist.

Jeder der Tiefeninformation-Kamerasensoren 61-1, 61-2, 61-3 ist ein sogenannter ToF-Sensor (ToF = Time-of-Flight) und als solcher ausgebildet zum Erfassen von Bildinformationen und Tiefeninformationen des ihm zugeordneten Längsteilabschnitts. Die Tiefeninformationen repräsentieren eine gemessene Laufzeit eines von dem ToF-Sensor zur Distanzmessung ausgesendeten Lichtimpulses und repräsentieren somit die Distanz zwischen dem ToF-Sensor und einem Punkt auf der Oberfläche des sich in dem Längsteilabschnitt Lx befindenden Futters. Jeder in Fig. 4 veranschaulichte Tiefeninformation-Kamerasensor 61-1, 61-2, 61-3 ist ausgebildet zum Ermitteln eines zweidimensionalen Feldes von Tiefeninformationen über die Bodenfläche bzw. Futteroberfläche des Längsteilabschnitts L1, L2, L3 und somit zum Ermitteln eines zweidimensionalen Füllstandprofils des ihm zugeordneten Längsteilabschnitts L1, L2, L3. Durch Mittelung der einzelnen Tiefeninformationswerte des ermittelten zweidimensionalen Füllstandprofils des Längsabschnitts L1, L2, L3 kann der jeweilige Tiefeninformation-Kamerasensor 61-1, 61-2, 61-3 und/oder die Füllstandlängsverteilung-Ermittlungseinrichtung 50 schließlich einen besonders exakten aktuellen Füllstand FS1, FS2, FS3 ermitteln. Es kann auch vorgesehen sein, dass die Tiefeninformation-Kamerasensoren 61-1, 61-2, 61-3 in dem Längsteilabschnitt L1, L2, L3 erfasste Bildinformationen zusätzlich oder alternativ zu den ermittelten Tiefeninformationen nutzen, um die aktuellen Füllstande FS1, FS2, FS3 zu ermitteln.

Die Futterwiegeeinrichtung 70 umfasst im dargestellten Ausführungsbeispiel drei Wiegesensor-Paare 71-1, 71-2 und 71-3 die den Futtervorratsbehälter 10 tragen Die Futterwiegeeinrichtung kann lediglich zum Messen des Gewichts bzw. der Masse der zu einem Messzeitpunkt im Futtervorratsbehälter 10 befindlichen Futters 14 vorgesehen sein. Die gemessenen Massedaten M der Futterwiegeeinrichtung 70 werden kontinuierlich an die Steuereinrichtung 20 übermittelt, welche aus den Massedaten M kontinuierlich die Masse des sich bereits in dem Futtervorratsbehälter 10 befindenden Futters und unter Kenntnis einer von dem Futterlager 15 zu entnehmenden vorgegebenen Futtergesamtmenge die Restmasse des noch vom Futterlager 15 zu entnehmenden Futters ermittelt. Wenn die Steuereinrichtung 20 feststellt, dass die noch zu entnehmende Restmasse sehr gering ist und beispielsweise weniger als 10% der Futtergesamtmenge beträgt, stellt die Steuereinrichtung 20 die dem Förderanlagenantrieb 17 zugeführte Fördergeschwindigkeit vSOLL derart ein, dass das noch vom Futterlager 15 zu entnehmende Futter hauptsächlich in dem Längsabschnitt Lx mit dem aktuell geringsten Füllstand FSx abgeworfen wird.

Alternativ oder ergänzend zur Ermittlung der im Futtervorrastbehälter 10 befindlichen Futtermasse kann die Wiegeeinrichtung 70 - wie weiter oben schon beschrieben - so konzipiert sein, dass auf Basis der Wiegesensor-Daten eine Füllstandlängsverteilung im Futtervorratsbehälter 10 berechnet werden kann.

Die Flugcharakteristik-Ermittlungseinrichtung 80 ist bei dem in Fig. 4 veranschaulichten Ausführungsbeispiel des Futtermischwagens 100 zwischen der Förderanlage 16 und dem Futtervorratsbehälter 10 angeordnet. Die Flugcharakteristik-Ermittlungseinrichtung 80 ist mit nicht veranschaulichten Sensoren versehen, beispielsweise einer Anzahl von Lichtschranken oder Abstandssensoren und/oder Kameras, und ermittelt Flugcharakteristikdaten FC, welche das aktuelle Flugverhalten bzw. die aktuelle Flugcharakteristik einer sich auf einer Flugbahn von der Förderanlage 16 in den Futtervorratsbehälter 10 befindlichen Futtermenge repräsentieren. Aus den an die Steuereinrichtung 20 gespeisten Flugcharakteristikdaten FC kann die Steuereinrichtung 20 beispielsweise anhand der Höhe der Flugbahn und/oder der Krümmung der Flugbahn und/oder der Fluggeschwindigkeit des Futters ermitteln, ob oder ob nicht die aktuell in den Futtervorratsbehälter 10 ausgeworfene Futtermenge entlang der erwünschten Soll-Flugbahn FB-vSOLL fliegt, und ob oder ob nicht die aktuell vorgegebene Fördergeschwindigkeit vSOLL verändert werden muss, damit die aktuell von der Entnahmevorrichtung 12 entnommene Futtermenge 14 in dem aktuell zu befüllenden Längsteilabschnitt Lx des Futtervorratsbehälters 10 landen wird. Es kann auch vorgesehen sein, dass die Flugcharakteristik-Ermittlungseinrichtung 80 optional oder ausschließlich Messdaten von Sensoren, wie beispielsweise Bilddaten von Kamerasensoren, der Füllstandlängsverteilung-Ermittlungseinrichtung 60 nutzt.

Die elektronische Datenbank 90 ist mit der Steuereinrichtung 20 zum Datenaustausch gekoppelt. In der elektronischen Datenbank 90 sind Datensätze gespeichert. Jeder Datensatz enthält eine futterkomponentenspezifische und/oder futterlagerspezifische und/oder geokoordinatenspezifische Zuordnung von Soll-Fördergeschwindigkeiten vSOLL zu Ist-Schwenkpositionen SPist. Vorzugsweise unmittelbar vor Beginn des Befüllungsbetriebszustands wählt die Steuereinrichtung 20 einen der in der elektronischen Datenbank 90 gespeicherten Datensätze zur Verwendung während des Befüllungsbetriebszustands aus, beispielsweise durch Übermittlung der aktuellen Geokoordinatenposition des Futtermischwagens 100 an die elektronische Datenbank 90. Während des Befüllungsbetriebszustands übermittelt die Steuereinrichtung 20 kontinuierlich die von der Schwenkposition-Ermittlungseinrichtung 30 ermittelte Ist-Schwenkposition SPist an die elektronische Datenbank 90, eventuell ergänzt um weitere Informationen, wie beispielsweise eine Spezifizierung des aktuell zu befüllenden Längsteilabschnitts Lx, und die elektronische Datenbank 90 übermittelt daraufhin die für diese Ist-Schwenkposition SPist anzusteuernde Soll-Fördergeschwindigkeit vSOLL an die Steuereinrichtung 20.

### Bezugszeichenliste

- 10: Futtervorratsbehälter
- 11: Entnahmearm
- 12: Entnahmevorrichtung
- 13: Antriebseinrichtung
- 14: entnommenes Futter
- 15: Futterlager
- 16: Förderanlage
- 17: Förderanlagenantrieb
- 18: Datenspeicher
- 19: Drehachse des Entnahmearms und der Förderanlage
- 20: Steuereinrichtung
- 21: Mischschnecke (in 10)
- 30: Schwenkposition-Ermittlungseinrichtung
- 40: Sensor-Gruppierung
- 41-1: Messsensor für Längsteilabschnitt L1
- 41-2: Messsensor für Längsteilabschnitt L2
- 41-3: Messsensor für Längsteilabschnitt L3
- 50: Füllstandlängsverteilung-Ermittlungseinrichtung
- 60: Sensor-Gruppierung
- 61-1: optischer Sensor (Tiefeninformation-Kamerasensor) für Längsteilabschnitt L1
- 61-2: optischer Sensor (Tiefeninformation-Kamerasensor) für Längsteilabschnitt L2
- 61-3: optischer Sensor (Tiefeninformation-Kamerasensor) für Längsteilabschnitt L3
- 70: Futterwiegeeinrichtung
- 71-1: Wiegesensor für Längsteilabschnitt L1
- 71-2: Wiegesensor für Längsteilabschnitt L2
- 71-3: Wiegesensor für Längsteilabschnitt L3
- 80: Flugcharakteristik-Ermittlungseinrichtung
- 90: elektronische Datenbank
- 100: Futtermischwagen
- FB1: Flugbahn 1
- FB2: Flugbahn 2
- FB-vSOLL: Flugbahn für Soll-Fördergeschwindigkeit
- FC: Flugcharakteristikdaten
- FSist: Ist-Füllstand über alle Längsteilabschnitte
- FSLV: Füllstandlängsverteilung
- FSmax: maximal zulässiger Füllstand
- FS1: Füllstand von Längsteilabschnitt L1
- FS2: Füllstand von Längsteilabschnitt L2
- FS3: Füllstand von Längsteilabschnitt L3
- L: Längsrichtung des Futtermischwagens
- L1: Längsteilabschnitt 1
- L2: Längsteilabschnitt 2
- L3: Längsteilabschnitt 3
- M: Massedaten
- SP1: oberste Schwenkposition
- SP2: unterste Schwenkposition
- SPist: Ist-Schwenkposition
- v: Fördergeschwindigkeit
- vSOLL: Soll-Fördergeschwindigkeit
- W: Drehwinkel

## Patentansprüche

1. Futtermischwagen (100) umfassend:
- eine Antriebseinrichtung (13),
- einen Futtervorratsbehälter (10),
- eine Wiegeeinrichtung (70) zur Ermittlung einer in den Futtervorratsbehälter (10) eingebrachten Futtermenge,
- einen schwenkbaren Entnahmearm (11) mit einer Entnahmevorrichtung (12) zur Entnahme von Futter (14) aus einem Futterlager (15) während eines Befüllungsbetriebszustands des Futtermischwagens (100),
- eine Förderanlage (16) mit einer steuerbaren Fördergeschwindigkeit (v, vSOLL) zum Transport des von der Entnahmevorrichtung (12) entnommenen Futters (14) in den Futtervorratsbehälter (10),
- einen Datenspeicher (18) und
- eine Steuereinrichtung (20) zum Steuern der Fördergeschwindigkeit (v, vSOLL) der Förderanlage (16) auf Grundlage von in dem Datenspeicher (18) gespeicherten Daten,
**dadurch gekennzeichnet, dass** der Futtermischwagen (100) versehen ist mit
- mindestens einer Schwenkposition-Ermittlungseinrichtung (30), die ausgebildet ist, während des Befüllungsbetriebszustands eine aktuellen Schwenkposition (SPist, SP1, SP2, Vη der schwenkbaren Förderanlage (16) zu ermitteln,
- mindestens einer Füllstandlängsverteilung-Ermittlungseinrichtung (50), die ausgebildet ist, während des Befüllungsbetriebszustands eine aktuelle Füllstandlängsverteilung (FSLV) des in dem Futtervorratsbehälter (10) befindlichen Futters in einer Längsrichtung (L) des Futtermischwagens (100) zu ermitteln,
- und wobei die Steuereinrichtung (20) ausgebildet ist, während des Befüllungsbetriebszustands die Fördergeschwindigkeit (v, vSOLL) der Förderanlage (16)
o in Abhängigkeit der ermittelten Schwenkposition (SPist)
o und/oder der ermittelten Füllstandlängsverteilung (FSLV)
unter Einhaltung einer der Steuervorrichtung (20) als Steuerungskriterium vorgegebenen Längsbefüllungscharakteristik derart zu steuern, dass während des Befüllungsbetriebszustands ein Futterüberwurf und/oder eine Überfüllung eines Längsteilabschnitts (L1, L2, L3) des Futtervorratsbehälters (10) verhindert werden.

2. Futtermischwagen (100) nach Anspruch 1, **dadurch gekennzeichnet, dass** die Füllstandlängsverteilungs-Ermittlungseinrichtung (50) Messsensoren (41-1, 41-2, 41-3) und/oder optische Sensoren (61-1, 61-2, 61-3) und/oder Wiegesensoren (70-1, 70-2, 70-3) zur Ermittlung einer lokalen Füllstandshöhe (FSist) umfasst.

3. Futtermischwagen (100) nach einem der vorherigen Ansprüche, **dadurch gekennzeichnet, dass** die mindestens eine Füllstandlängsverteilung-Ermittlungseinrichtung (50) ausgebildet ist, die aktuelle Füllstandlängsverteilung (FSLV) unter Berücksichtigung eines bisherigen Verlaufs der ermittelten Schwenkposition (SPist, SP1, SP2, Vη und/oder eines bisherigen Verlaufs der Fördergeschwindigkeit (v, vSOLL) zu ermitteln.

4. Futtermischwagen (100) nach einem der vorherigen Ansprüche, **dadurch gekennzeichnet, dass** die Steuereinrichtung (20) mit einer elektronischen Datenbank (90) mit darin gespeicherten Datensätzen gekoppelt oder koppelbar ist, wobei jeder Datensatz eine futterkomponentenspezifische und/oder futterlagerspezifische und/oder geokoordinatenspezifische Zuordnung von Soll-Fördergeschwindigkeiten (vSOLL) zu Ist-Schwenkpositionen (SPist) enthält, und die Steuereinrichtung (20) ausgebildet ist zum Steuern der Fördergeschwindigkeit (v, vSOLL) mit Verwendung eines von einem Benutzer oder automatisch durch die Steuereinrichtung (20) ausgewählten Datensatzes der elektronischen Datenbank (90), insbesondere zur Anpassung der der ermittelten Schwenkposition (SPist) zugeordneten Soll-Fördergeschwindigkeit (vSOLL).

5. Futtermischwagen (100) nach einem der vorherigen Ansprüche, **dadurch gekennzeichnet, dass** die Steuereinrichtung (20) ausgebildet ist zum Adaptieren der Soll-Fördergeschwindigkeiten (vSOLL) des Datensatzes während des Befüllungsbetriebszustands.

6. Futtermischwagen (100) nach einem der vorherigen Ansprüche, **dadurch gekennzeichnet, dass** die von der Steuereinrichtung (20) als Steuerungskriterium einzuhaltende Längsverteilungscharakteristik derart vorgegeben ist, dass die maximal zulässige Abweichung der Füllstande (FS1, FS2, FS3) der Längsteilabschnitte (L1, L2, L3) des Futtervorratsbehälters (10) während des Befüllungsbetriebszustands höchstens 30%, bevorzugt 20%, besonders bevorzugt 10%, beträgt.

7. Futtermischwagen (100) nach einem der vorherigen Ansprüche, **dadurch gekennzeichnet, dass** die mindestens eine Füllstandlängsverteilung-Ermittlungseinrichtung (50) eine Gruppierung (41) von individuellen Längsteilabschnitten (L1, L2, L3) des Futtervorratsbehälters (10) zugeordneten Abstandssensoren und/oder Lichtschranken (41-1, 41-2, 41-3) umfasst, und die Füllstandlängsverteilung-Ermittlungseinrichtung (50) ausgebildet ist zum Ermitteln einer aktuellen Füllstandlängsverteilung (FSLV) auf Grundlage von Signalen der Abstandssensoren und/oder Lichtschranken (41-1, 41-2, 41-3).

8. Futtermischwagen (100) nach einem der vorherigen Ansprüche, **dadurch gekennzeichnet, dass** die mindestens eine Füllstandlängsverteilung-Ermittlungseinrichtung (50) mindestens einen optischen Sensor (61-1, 61-2, 61-3), beispielsweise einen Kamerasensor oder einen Tiefeninformationssensor, umfasst, und die Füllstandlängsverteilung-Ermittlungseinrichtung (50) ausgebildet ist zum Ermitteln einer aktuellen Füllstandlängsverteilung (FSLV) auf Grundlage von durch den mindestens einen optischen Sensor (61-1, 61-2, 61-3) ermittelten Bildinformationen.

9. Futtermischwagen (100) nach einem der vorherigen Ansprüche, **dadurch gekennzeichnet, dass** die mindestens eine Füllstandlängsverteilung-Ermittlungseinrichtung (50) eine Gruppierung von individuellen Längsteilabschnitten (L1, L2, L3) des Futtervorratsbehälters (10) zugeordneten Wiegesensoren (71-1, 71-2, 71-3) umfasst, und die Füllstandlängsverteilung-Ermittlungseinrichtung (50) ausgebildet ist zum Ermitteln einer aktuellen Füllstandlängsverteilung (FSLV) auf Grundlage von Signalen der Wiegesensoren (71-1, 71-2, 71-3).

10. Futtermischwagen (100) nach einem der vorherigen Ansprüche, **dadurch gekennzeichnet, dass** der Futtermischwagen (100) mit mindestens einer Flugcharakteristik-Ermittlungseinrichtung (80) zum Ermitteln, während des Befüllungsbetriebszustands, einer Flugcharakteristik (FC) des von der Förderanlage (16) in den Futtervorratsbehälter (10) ausgeworfenen Futters versehen ist, und die Steuereinrichtung (20) ausgebildet ist zum Steuern der Fördergeschwindigkeit (v, vSOLL) in Abhängigkeit von der ermittelten Flugcharakteristik (FC).

11. Futtermischwagen (100) nach einem der vorherigen Ansprüche, **dadurch gekennzeichnet, dass** die Steuereinrichtung (20) ausgebildet ist zum Steuern eines Betriebsparameters der Entnahmevorrichtung (12) in Abhängigkeit von der ermittelten Schwenkposition (SPist, SP1, SP2, Vη und/oder der Fördergeschwindigkeit (v, vSOLL) und/oder der ermittelten Füllstandlängsverteilung (FSLV) und/oder der ermittelten Flugcharakteristik (FC), insbesondere beim Ausführen eines Absenkautomatikbetriebs für die Entnahmevorrichtung (12).

12. Futtermischwagen (100) nach einem der vorherigen Ansprüche, **dadurch gekennzeichnet, dass** die Steuereinrichtung (20) ausgebildet ist zum Ermitteln und/oder Empfangen einer aktuellen Fortbewegungsgeschwindigkeitsinformation des Futtermischwagens (100) während des Befüllungsbetriebszustands, und die Steuereinrichtung (20) ausgebildet ist zum Steuern der Fördergeschwindigkeit (v, vSOLL) in Abhängigkeit der Fortbewegungsgeschwindigkeitsinformation.

13. Futtermischwagen (100) nach einem der vorherigen Ansprüche, **dadurch gekennzeichnet, dass** die Schwenkposition-Ermittlungseinrichtung (30) eine Wegmesseinrichtung und/oder einen Drehwinkelsensor und/oder einen Umdrehungszähler und/oder einen Drucksensor und/oder einen Sensor zum Messen eines elektrischen Stroms oder eines Widerstands und/oder einen Zeitsensor und/oder einen Abstandssensor und/oder einen GPS-Sensor umfasst.

14. Verfahren zur Steuerung der Befüllung eines Futtermischwagens (100), der wenigstens umfasst:
- eine Antriebseinrichtung (13),
- einen Futtervorratsbehälter (10),
- eine Wiegeeinrichtung (70) zur Ermittlung einer in den Futtervorratsbehälter (10) eingebrachten Futtermenge,
- einen schwenkbaren Entnahmearm (11) mit einer Entnahmevorrichtung (12) zur Entnahme von Futter (14) aus einem Futterlager (15) während eines Befüllungsbetriebszustands des Futtermischwagens (100),
- eine Förderanlage (16) mit einer steuerbaren Fördergeschwindigkeit (v, vSOLL) zum Transport des von der Entnahmevorrichtung (12) entnommenen Futters (14) in den Futtervorratsbehälter (10),
- einen Datenspeicher (18) und
- eine Steuereinrichtung (20) zum Steuern der Fördergeschwindigkeit (v, vSOLL) der Förderanlage (16) auf Grundlage von in dem Datenspeicher (18) gespeicherten Daten,
**dadurch gekennzeichnet, dass** der Futtermischwagen (100) während des Befüllungsbetriebszustands
- eine aktuelle Schwenkposition (SPist, SP1, SP2, Vη der Förderanlage (16) und
- eine aktuelle Füllstandlängsverteilung (FSLV) des in dem Futtervorratsbehälter (10) befindlichen Futters in einer Längsrichtung (L) des Futtermischwagens (100) ermittelt,
und die Steuereinrichtung (20) während des Befüllungsbetriebszustands:
- die Fördergeschwindigkeit (v, vSOLL) der Förderanlage (16)
- und/oder Schwenkposition (SPist, SP1, SP2, W) der Förderanlage (16) auf Basis einer als Steuerungskriterium vorgegebenen Längsbefüllungscharakteristik derart steuert, dass während des Befüllungsbetriebszustands ein Futterüberwurf und eine Überfüllung eines Längsteilabschnitts (L1, L2, L3) des Futtervorratsbehälters (10) verhindert werden.
